# EUROPÄISCHE PATENTSCHRIFT

(11) **EP 0 797 104 B1**
(45) Veröffentlichungstag und Bekanntmachung des Hinweises auf die Patenterteilung: **01.10.2003**
(21) Anmeldenummer: 97103945.8
(22) Anmeldetag: 10.03.1997
(51) Int. Cl.: G01S 7/03

(54) **Monostatisches homodynes Radarsystem**
Monostatic homodyne radar system
Système radar monostatique et homodyne

(30) Priorität: 19.03.1996 DE 19610850
(43) Veröffentlichungstag der Anmeldung: 24.09.1997
(73) Patentinhaber: Infineon Technologies AG, 81669 München (DE)
(72) Erfinder: Siweris, Heinz-Jürgen, Dr., 81549 München (DE)
(74) Vertreter: Zimmermann & Partner

(56) Entgegenhaltungen:
- EP-A- 0 472 229
- US-A- 4 492 960
- US-A- 4 541 120
- US-A- 5 109 545

## Beschreibung

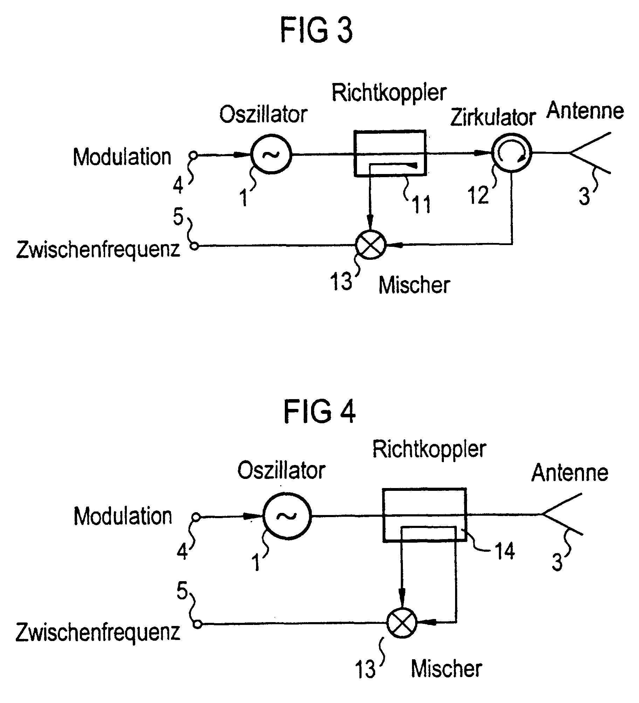

Bei einem zunehmenden Einsatz von Radarsystemen im zivilen Bereich z. B. in der industriellen Meßtechnik (z. B. Füllstandsmessung), in der Verkehrselektronik (Abstandswarnung, Messung der Geschwindigkeit über Grund) sowie im Konsumbereich (Bewegungsmelder, Türöffner) kommt es auf eine Minimierung des technischen Aufwandes und damit der Kosten besonders an. Ein für diese Anwendungen besonders geeignetes Radarsystem verwendet eine monostatische Ausführung, bei der eine Antenne sowohl für das Senden als auch für das Empfangen verwendet wird. Ein solches Radarsystem wird als monostatisch bezeichnet im Gegensatz zu Systemen mit getrennten Sende- und Empfangsantennen, die als bistatisches Radar bezeichnet werden. Bei dem in der herkömmlichen Radartechnik üblichen Aufbau eines Dauerstrichradarsystems wird ein von einem Oszillator erzeugtes Hochfrequenzsignal sowohl als Sendesignal über die Antenne abgestrahlt als auch nach dem Homodynprinzip dazu verwendet, in einem Mischer das Empfangssignal auf eine wesentlich niedrigere Zwischenfrequenz (Differenzfrequenz der beiden Signale) umzusetzen. Zu diesem Zweck wird ein Teil der von dem Oszillator abgegebenen Leistung mit Hilfe eines Richtkopplers vom Sendesignal abgezweigt und dem Eingang des Mischers zugeführt. Ein derartiges System ist im Schema in Figur 3 dargestellt. Der Oszillator 1 liefert das Hochfrequenzsignal, von dem in dem Richtkoppler 11 ein Teil abgezweigt und dem Mischer 13 zugeführt wird. Die Trennung von Sende- und Empfangssignal an der Antenne 3 erfolgt durch einen Zirkulator 12. Je nach der Anwendung des Systems bleibt die Frequenz des Hochfrequenzsignales konstant (z. B. beim Dopplerradar), oder die Frequenz wird durch ein externes Modulationssignal 4 verändert (FMCW-Radar [Frequency Modulated Continuous Wave], Puls-FM-Radar). Der für die Einspeisung des externen Modulationssignals vorgesehene Anschluß 4 und der für den Abgriff der Zwischenfrequenz vorgesehene Anschluß 5 sind in Figur 3 ebenfalls eingezeichnet.

Der bei dieser Anordnung verwendete Zirkulator 12 ist ein wesentliches Hindernis für eine einfache und kostengünstige Herstellung des Radarsystems. Eine Ausführung, die ohne diesen Zirkulator auskommt, laßt sich am einfachsten durch Verwendung zweier separater Antennen für Senden und Empfangen realisieren (bistatisches Radar). Nachteilig ist dabei vor allem die Zunahme der äußeren Abmessungen, die wesentlich durch die Antennen bestimmt werden. Hinzu kommt, daß durch den räumlichen Versatz der Antennen die Richtcharakteristiken insbesondere im Nahbereich nicht exakt übereinstimmen. Auch bei einem monostatischen Radarsystem kann man auf den Zirkulator verzichten, wenn man z. B. die Anordnung der Figur 4 wählt. Bei dieser Anordnung wird der Richtkoppler 14 auch dazu verwendet, das Empfangssignal, das von der Antenne kommt, zum Hochfrequenzeingang des Mischers 13 zu leiten. Entsprechend der Koppeldämpfung des Richtkopplers 14 wird die Leistung des Empfangssignals im Gegensatz zu der Anordnung mit Zirkulator nicht vollständig zum Mischer geführt. Die daraus resultierende geringere Empfindlichkeit des Empfängers ist aufgrund der geringen Reichweite (maximal 200 m) bei den eingangs genannten Anwendungen meistens zu tolerieren.

Bei den beschriebenen Anordnungen wurde vorausgesetzt, daß der Mischer über getrennte Eingänge für das Lokaloszillatorsignal und für das Hochfrequenzempfangssignal verfügt. Das ist bei den in der Mikrowellentechnik bevorzugt verwendeten Ausführungen mit balancierten Mischern der Fall. Bei einem nicht balancierten Mischer (z. B. bei einem Ein-Dioden-Mischer) werden die beiden zu mischenden Hochfrequenzsignale über einen gemeinsamen Anschluß zugeführt. Bei Verwendung eines solchen Mischers ist eine weitere Vereinfachung des Systems nach Figur 4 möglich, indem der Richtkoppler durch eine T-Verzweigung ersetzt wird. Der wesentliche Nachteil dieser Variante ist die Beeinträchtigung der Empfindlichkeit durch das im nicht balancierten Mischer demodulierte Amplitudenrauschen des Oszillators. Diese Lösung erscheint daher nur für Sensoren mit Reichweiten von wenigen Metern geeignet.

In US4492960 wird ein HF-System offenbart, das den Eingangsmischer ebenfalls als Umschalter benutz, um den Lohaloszillator als sendeoszillator zu verwenden. Dieser "switching mixer" kann auch als Abschwächer oder als Modulator verwendet werden.

Aufgabe der vorliegenden Erfindung ist es, ein vereinfachtes Radarsystem anzugeben, das bei kompakten Abmessungen nur eine geringe Anzahl von Komponenten erfordert.

Diese Aufgabe wird mit dem Radarsystem mit den Merkmalen des Anspruches 1 gelöst. Weitere Ausgestaltungen ergeben sich aus den abhängigen Ansprüchen.

Bei dem erfindungsgemäßen Radarsystem handelt es sich um ein monostatisches homodynes Radarsystem, das für Dauerstrichbetrieb vorgesehen ist. Bei diesem Radarsystem sind ein Oszillator zur Erzeugung des Hochfrequenzsignales und eine für Senden und Empfangen verwendete Antenne vorhanden. Dieser Oszillator und die Antenne sind an jeweils ein Eingangstor eines Mischers angeschlossen, der außerdem über ein Ausgangstor verfügt. Der Mischer ist ein balancierter Mischer. der einen Richtkoppler und zwei nichtlineare Bauelemente umfaßt. Die Phasendifferenz zwischen den beiden Koppelarmen des Richtkopplers beträgt 90°. Der Mischer ist so konzipiert, daß die Koppelarme durch Lastimpedanzen mit einem so deutlich über 0 liegenden Reflexionsfaktor abgeschlossen sind, daß ein ausreichender Anteil der von dem Oszillator bereitgestellten Leistung auf das andere Eingangstor des Mischers überkoppelt und für das Abstrahlen zur Verfügung steht. Die durch das Mischen des Oszillatorsignales und eines Empfangssignales erzeugte Zwischenfrequenz kann an dem Ausgangstor des Mischers abgegriffen werden.

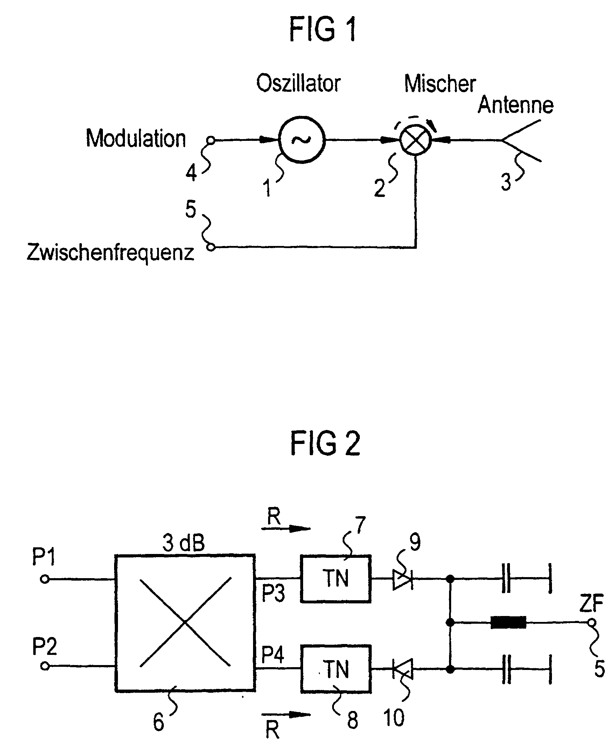

Es folgt eine genauere Erläuterung des erfindungsgemäßen Systems anhand der Figuren 1 und 2.
Figur 1 zeigt die erfindungsgemäße Anordnung im Schema.
Figur 2 zeigt den schematischen Aufbau des in der Anordnung der Figur 1 eingesetzten Mischers.

In Figur 1 sind die Anordnung aus einem Oszillator 1, einem Mischer 2 und einer Antenne 3 dargestellt. Eine externe Modulation des von dem Oszillator erzeugten Hochfrequenzsignales erfolgt über den Anschluß 4. Die von dem Mischer gelieferte Zwischenfrequenz steht an dem Anschluß 5 des Ausgangstors des Mischers zur Verfügung. Durch den gekrümmten gestrichelten Pfeil ist die teilweise Überkopplung der von dem Oszillator gelieferten Leistung zu dem Antennenanschluß angedeutet. Der Lokaloszillatoreingang (LO input) des Mischers 2 ist direkt mit dem Oszillator 1 verbunden, der Hochfrequenzeingang (RF input) des Mischers ist direkt mit der Antenne 3 verbunden. Bei einem balancierten Mischer üblicher Bauart, wie er z. B. bei den eingangs beschriebenen Anordnungen der Figuren 3 und 4 verwendet wird, wird eine möglichst gute Entkopplung aller drei Tore (zwei Eingangstore, ein Ausgangstor) angestrebt. Das hätte bei der Anordnung der Figur 1 zur Folge, daß keine Abstrahlung über die Antenne stattfindet, weil die gesamte von dem Oszillator zum Eingangstor des Mischers gelangende Leistung im Mischer absorbiert würde. Der erfindungsgemäß verwendete balancierte Mischer ist daher so modifiziert, daß ein definierter Teil der Leistung des von dem Oszillator gelieferten Hochfrequenzsignales zum anderen Eingangstor des Mischers überkoppelt und auf diesem Weg zur Antenne 3 gelangt.

In Figur 2 ist das prinzipielle Schaltbild eines balancierten Mischers mit Schottky-Dioden dargestellt. Dieser Mischer umfaßt einen Richtkoppler 6, Transformationsnetzwerke 7, 8 (TN), Dioden 9, 10 und ein CLC-Glied mit einem Anschluß 5, dem Ausgangstor des Mischers. Die Dioden 9, 10 sind gegensinnig zueinander angeordnet, wodurch sich am Ausgangstor 5 der gewünschte Balancierungseffekt ergibt. An die Ausgänge P3, P4 des Richtkopplers 6 gelangen Linearkombinationen der an den Eingängen P1, P2 des Richtkopplers anliegenden Signale. Wegen der nichtlinearen Kennlinien erzeugen die Dioden Signale unter anderem bei der Differenzfrequenz, die über das durch das CLC-Glied gebildete Tiefpaßfilter als Zwischenfrequenzsignal an den Anschluß 5 gelangen. Die Transformationsnetzwerke 7, 8 formen die Impedanzen der Dioden 9, 10 so um, daß sich an den Ausgängen P3, P4 des Richtkopplers gleiche Lastimpedanzen mit positivem Reflexionsfaktor ergeben. Diese Transformationsnetzwerke können entfallen, falls die Diodenimpedanz bereits unmittelbar zum gewünschten Reflexionsfaktor führt oder dieser Reflexionsfaktor sich über andere Maßnahmen, wie z. B. das Anlegen einer geeigneten Gleichspannung an die Dioden, herbeiführen läßt. Statt der Dioden sind andere geeignete Halbleiterbauelemente, z. B. Transistoren, die nichtlineare Kennlinien aufweisen, in einer balancierten Anordnung verwendbar. Der Reflexionsfaktor wird vorzugsweise deutlich größer als 0 eingestellt; bevorzugte Werte ergeben sich im Bereich größer als 0,3. Trotz des nichtverschwindenden Reflexionsfaktors bleiben die Eingangstore des Mischers aufgrund der gewählten Phasendifferenz von 90° zwischen den Koppelarmen ideal angepaßt. Die Entkopplung wird jedoch aufgehoben, die Leistungsdämpfung zwischen den Eingangstoren beträgt 1/|R|². Wird beispielsweise |R|=2^{-1/2} gewählt, so wird die Hälfte der an den Eingangstoren eingespeisten Leistung zum jeweils anderen Eingangstor übertragen.

## Patentansprüche

1. Monostatisches homodynes Radarsystem für Dauerstrichbetrieb
a) mit einem Oszillator (1) zur Erzeugung eines Hochfrequenzsignales,
b) mit einem balancierten Mischer (2) mit zwei Eingangstoren und einem Ausgangstor und
c) mit einer Antenne (3),
d) bei dem ein Eingangstor des Mischers mit dem Oszillator und ein Eingangstor des Mischers mit der Antenne verbunden ist,
e) bei dem der Mischer einen Richtkoppler (6) mit 90° Phasendifferenz zwischen den Koppelarmen enthält,
f) bei dem dieser Richtkoppler zwei Eingänge (P1, P2), die die Eingangstore des Mischers bilden, und zwei Ausgänge(P3, P4) besitzt und
g) bei dem diese Ausgänge mit solchen Impedanzen abgeschlossen sind, daß sich ein Reflexionsfaktor ergibt, der mindestens so groß ist, daß eine für eine vorgesehene Sendeleistung ausreichende Überkopplung der von dem Oszillator abgegebenen Leistung zwischen den Eingangstoren des Mischers stattfindet.

2. Radarsystem nach Anspruch 1,
bei dem der Reflexionsfaktor mindestens 0,3 ist.

3. Radarsystem nach Anspruch 1 oder 2,
bei dem der Mischer zwei Transformationsnetzwerke (7, 8) enthält,
bei dem jedes dieser Transformationsnetzwerke mit einem Eingang an je einen Ausgang (P3, P4) des Richtkopplers angeschlossen ist und mit einem Ausgang an je ein nichtlineares Schaltungselement angeschlossen ist und
bei dem diese Transformationsnetzwerke den vorgesehenen Reflexionsfaktor an den Ausgängen des Richtkopplers bewirken.

4. Radarsystem nach Anspruch 1 oder 2,
bei dem der Mischer nichtlineare Schaltungselemente enthält, die unmittelbar an die Ausgänge (P3, P4) des Richtkopplers angeschlossen sind und die so beschaffen und so beschaltet sind, daß sie den vorgesehenen Reflexionsfaktor bewirken.

5. Radarsystem nach einem der Ansprüche 1 bis 4,
bei dem das Hochfrequenzsignal moduliert wird.

## Claims

1. Monostatic homodyne radar system for continuous wave operation
a) having an oscillator (1) for producing a radio-frequency signal,
b) having a balanced mixer (2) with two input ports and one output port, and
c) having an antenna (3),
d) in which one input port of the mixer is connected to the oscillator and one input port of the mixer is connected to the antenna,
e) in which the mixer contains a directional coupler (6) with a 90° phase difference between the coupling arms,
f) in which this directional coupler has two inputs (P1, P2) which form the input ports of the mixer, and has two outputs (P3, P4), and
g) in which these outputs are terminated by impedances such that they result in a reflection factor which is at least sufficiently great that a sufficient proportion of the power which is emitted from the oscillator for an intended transmission power is coupled between the input ports of the mixer.

2. Radar system according to Claim 1, in which the reflection factor is at least 0.3.

3. Radar system according to Claim 1 or 2,
in which the mixer contains two transformation networks (7, 8),
in which each of these transformation networks is connected by one input to a respective output (P3, P4) of the directional coupler, and is connected by an output to in each case one non-linear circuit element, and
in which these transformation networks produce the intended reflection factor at the outputs of the directional coupler.

4. Radar system according to Claim 1 or 2,
in which the mixer contains non-linear circuit elements, which are connected directly to the outputs (P3, P4) of the directional coupler and are created and connected such that they produce the intended reflection factor.

5. Radar system according to one of Claims 1 to 4,
in which the radio-frequency signal is modulated.

## Revendications

1. Système de radar homodyne monostatique pour un fonction à ondes entretenues, comportant
a) un oscillateur (1) destiné à générer un signal de fréquence élevée,
b) un mélangeur équilibré (2) comportant deux entrées et une sortie et
c) une antenne (3),
d) dans lequel une entrée du mélangeur est reliée à l'oscillateur et une entrée du mélangeur est reliée à l'antenne,
e) dans lequel le mélangeur comprend un coupleur directionnel (6) dont les bras des découplage présente un déphasage de 90°,
f) dans lequel ce coupleur directionnel possèdent deux entrées (P1, P2) qui forment les entrées du mélangeur, et deux sorties (P3, P4) et
g) dans lequel ces sorties sont fermées par des impédances de façon à obtenir un facteur de réflexion au moins si grand qu'il se produit entre les entrées du mélangeur un surcouplage de la puissance délivrée par l'oscillateur qui est suffisant pour une puissance d'émission prévue.

2. Système de radar selon la revendication 1, dans lequel le facteur de réflexion est au moins de 0,3.

3. Système de radar selon la revendication 1 ou 2, dans lequel le mélangeur comporte deux réseaux de transformation (7, 8),
chacun de ces réseaux de transformation étant raccordé à une entrée au niveau de chaque sortie (P3, P4) du coupleur directionnel et étant raccordé à une sortie au niveau de chaque élément de commutation non linéaire et
ces réseaux de transformation générant un facteur de réflexion au niveau des sorties du coupleur directionnel.

4. Système de radar selon la revendication 1 ou 2, dans lequel le mélangeur comprend des éléments de commutation non linéaires qui sont raccordés directement aux sorties (P3, P4) du coupleur directionnel et qui sont alimentés et commutés de façon à générer le facteur de réflexion prévu.

5. Système de radar selon l'une des revendications 1 à 4, dans lequel le signal de fréquence élevée est modulé.
